# NEW EUROPEAN PATENT SPECIFICATION

(11) **EP 0 638 737 B2**
(45) Date of publication and mention of the opposition decision: **05.05.2010**
(45) Mention of the grant of the patent: 10.05.2000
(21) Application number: 94112515.5
(22) Date of filing: 10.08.1994
(51) Int. Cl.: F16C 33/44

(54) **Retainer for rolling-contact bearing**
Walzlagerkäfig
Cage pour palier à contact de roulement

(30) Priority: 10.08.1993 JP 19852193; 18.11.1993 JP 28918493
(43) Date of publication of application: 15.02.1995
(73) Proprietor: JTEKT Corporation, Osaka-shi Osaka 542-8502 (JP)
(72) Inventor: Ueno, Hiroshi, Tondabayashi-shi, Osaka 584 (JP); Yamamoto, Akira, Kashiwara-shi, Osaka 582 (JP); Ohtani, Megumi, Kashihara-shi, Nara 634 (JP); Terada, Tadahiro, Kita-Katsuragi-Gun, Nara 639-21 (JP)
(74) Representative: Sajda, Wolf E.

(56) References cited:
- EP-A- 0 041 079
- EP-A2- 0 324 278
- DE-A1- 3 617 501
- GB-A- 2 217 395
- JP-A- 02 134 413
- US-A- 4 492 415
- US-A- 4 657 984
- US-A- 4 999 394
- US-A- 5 118 207
- US-A- 5 230 570

## Description

### BACKGROUND OF THE INVENTION

The present invention relates to a retainer for a rolling-contact bearing according to the preamble of claim 1.

As a retainer for a rolling-contact bearing, there have hitherto been used various materials comprising an aliphatic polyamide resin (e.g. nylon 6, nylon 66, nylon 46, etc.) as a matrix, which are lightweight in comparison with those made of metal and are superior in mechanical properties.

However, when an aliphatic polyamide resin is used in a highly heated lubricating oil such as gear oil, its poor durability (oil resistance) leads to deterioration with time, which results in great reduction in strength. This is because the lubricating oil is oxidized under the condition of high temperature so that its acidity is increased and the aliphatic polyamide resin is thermally oxidized under this heated, acid atmosphere.

Accordingly, the upper limit of the temperature at which a retainer made of an aliphatic polyamide resin matrix for a rolling-contact bearing can be employed is about 120 to 130°C. At higher temperatures, a retainer made of metal is normally used at present.

It is also possible to use so-called super engineering plastics usable at higher temperatures, such as polyether sulfone (PES), polyphenylene sulfide (PPS), polyether ether ketone (PEEK), etc., instead of the aliphatic polyamide resin. However, most of the super engineering plastics are inferior in flexibility and expensive in comparison with the aliphatic polyamide resin so that their use is limited and they have not been put into practical use yet.

The document US-A-4 999 394 discloses a retainer for a roller bearing comprising a polyamide resin, a percentage of an elastomer and a percentage of a reinforcing fibre. According to this document, polybutadiene is the hydrocarbon resin used as elastomer. The conventional retainer is intended to be less susceptible to dimensional variations and to damage. No specific measures are disclosed in that document how to obtain excellent oil resistance when using such a retainer in a lubricating oil at high temperatures.

### OBJECT AND SUMMARY OF THE INVENTION

It is the object of the present invention to provide a retainer according to the preamble of claim 1, which can exhibit excellent oil resistance when using it in a lubricating oil at high temperature.

In order to accomplish the object, the present inventors have studied how to improve oil resistance of the retainer made of an aliphatic polyamide resin matrix for a rolling-contact bearing, utilizing a polymer alloy technique. Firstly, they studied to disperse materials having a high oil resistance such as polytetrafluoroethylene (PTFE) into an aliphatic polyamide resin matrix, however, the oil resistance could not be improved. Then, they studied about other various polymers. As a result, it has been found that, by dispersing a hydrocarbon polymer of the kind referred to in the characterising part of claim 1. which has a good compatibility with the aliphatic polyamide resin matrix but which itself has no oil resistance, the oil resistance of the retainer for rolling-contact bearing is dramatically improved, thereby affording oil resistance at high temperatures comparable to that of super engineering plastics such as PES, PPS and the like. Thus, the present invention has been accomplished. According to the invention, the object is solved by a retainer according to claim 1. Further developments are specified in the subclaims.

There may be various causes of the dramatic improvement of the oil resistance of the retainer for a rolling-contact bearing of the present invention, and one of such causes may be that the hydrocarbon polymer dispersed in the aliphatic polyamide resin matrix exhibits a masking effect of preventing penetration of oil into the interior of the retainer. Another possibility is that the hydrocarbon polymer having no oil resistance is oxidized prior to the thermal oxidation of the aliphatic polyamide resin matrix to prevent thermal oxidization of the aliphatic polyamide resin matrix.

Considering that the hydrocarbon polymer exhibits the masking effect of preventing permeation of oil, as described above, it follows that the interior of the retainer receives only heat from the high-temperature oil. When the temperature is too high, it may suffer from thermal deterioration due to temperature. On the other hand, it is expected that an annealing effect may improve the strength at the initial employment of the retainer, within a certain range of the temperature.

The retainer for a rolling-contact bearing with the above structure of the present invention uses an aliphatic polyamide resin having excellent retainer characteristics as a matrix, and is composed of an aliphatic polyamide resin and a hydrocarbon polymer of the kind referred to in the characterising part of claim 1 which are inexpensive and easily available in comparison with the super engineering plastic. Further, the retainer of the present invention has a high-temperature oil resistance comparable to that of the retainer made of the super engineering plastic. Therefore, when its characteristics and economy as a retainer are totally evaluated, it is superior to those made of super engineering plastic.

### BRIEF EXPLANATION OF THE INVENTION

Fig. 1 is a perspective view illustrating an embodiment of the crown retainer for a ball bearing of the present invention.
Fig. 2 is a front view illustrating a measurement method of the strength of the crown retainer for ball bearing.
Fig. 3 is a side view illustrating a measurement method of the strength of the crown retainer for a ball bearing.
Fig. 4 is a graph illustrating a relation between the dipping time of the crown retainer for a ball bearing of Example 1 in a high-temperature oil and the tensile break strength.
Fig. 5 is a graph illustrating a relation between the dipping time of the crown retainer for a ball bearing of Example 2 in a high-temperature oil and the tensile break strength.
Fig. 6 is a graph illustrating a relation between the dipping time of the crown retainer for a ball bearing of Comparative Example 1 in a high-temperature oil and the tensile break strength.
Fig. 7 is a graph illustrating a relation between the dipping time of the crown retainer for a ball bearing of Comparative Example 2 in a high-temperature oil and the tensile break strength.
Fig. 8 is a graph illustrating a relation between the dipping time of the crown retainer for a ball bearings of Examples 1 and 2, Comparative Examples 1 and 2 and Reference Examples 1 and 2 in a high-temperature oil and the tensile break strength.
Fig. 9 is a graph illustrating a.relation between the dipping time of the crown retainer for a ball bearing of Examples 1, 3 and 4 and Comparative Example 3 in a high-temperature oil heated to 140°C and the tensile break strength.
Fig. 10 is a graph illustrating a relation between the dipping time of the crown retainer for a ball bearing of Examples 1, 3 and 4 and Comparative Example 3 in a high-temperature oil heated to 160 °C and the tensile break strength.
Fig. 11 is a graph illustrating a relation between the dipping time of the crown retainer for a ball bearing of Examples 1, 3 and 4 and Comparative Example 3 in a high-temperature oil heated to 180 °C and the tensile break strength.
Fig. 12 is a perspective view illustrating a retainer for a cylindrical roller bearing split in two parts, to which the present invention is applied.
Fig. 13 is a sectional view illustrating the interior of an automotive transmission into which the cylindrical roller bearing split in two parts is incorporated.
Fig. 14 is a perspective view illustrating a retainer for a needle roller bearing split in one portion, to which the present invention is applied.
Fig. 15 is a partial perspective view illustrating a retainer for a double row angular ball bearing to which the present invention is applied.
Fig. 16 is a partial sectional view illustrating the interior of an automotive trans-axle into which the double row angular ball bearing is incorporated.

### DETAILED DESCRIPTION OF THE INVENTION

As described above, the present invention relates to an improvement of a retainer for a rolling-contact bearing, which comprises an aliphatic polyamide resin as a matrix. This improved retainer for a rolling-contact bearing is used in a lubricating oil heated to a high temperature, such as gear oil, etc., and is composed of a resin comprising an aliphatic polyamide resin as a matrix and a hydrocarbon polymer of the kind referred to in the characterising part of claim 1 having no oil resistance in a lubrication oil and good compatibility with the aliphatic polyamide resin matrix, which is dispersed in the aliphatic polyamide resin matrix.

As the aliphatic polyamide resin which is the matrix of the above retainer there is used one of the known aliphatic polyamide resins nylon 6, and nylon 66. Particularly, most popular nylon 66. i.e. a reaction product of adipic acid and hexamethylenediamine, an aliphatic polyamide resin having a repeating unit represented by the formula (1):

-[HN-(CH₂)₆-NH-CO-(CH₂)₄-CO]- (1)

is most preferably used in the present invention because of its low price and easy handling.

As the hydrocarbon polymer to be dispersed in the aliphatic polyamide resin matrix, an olefin polymer which itself has no oil resistance in a lubricating oil is used. These olefin polymers are selected from polyethylene, polypropylene, ethylene-propylene rubber (EPM), ethylene-propylene diene rubber (EPDM). These olefin polymers can be used as they are, or modified to improve their compatibility with the aliphatic polyamide resin matrix. As the modified olefin polymer, there can be used polymers modified by copolymerizing the above respective olefin polymers with α , β - unsaturated carboxylic acids, their esters or metallic salts. Further, polymers modified by grafting carboxylic acids or acid anhydrides into olefin polymers can also be used. In case of EPDM, there can be suitably used polymers modified by grafting maleic anhydrides, of which compatibility with the aliphatic resin matrix has been improved, in the present invention.

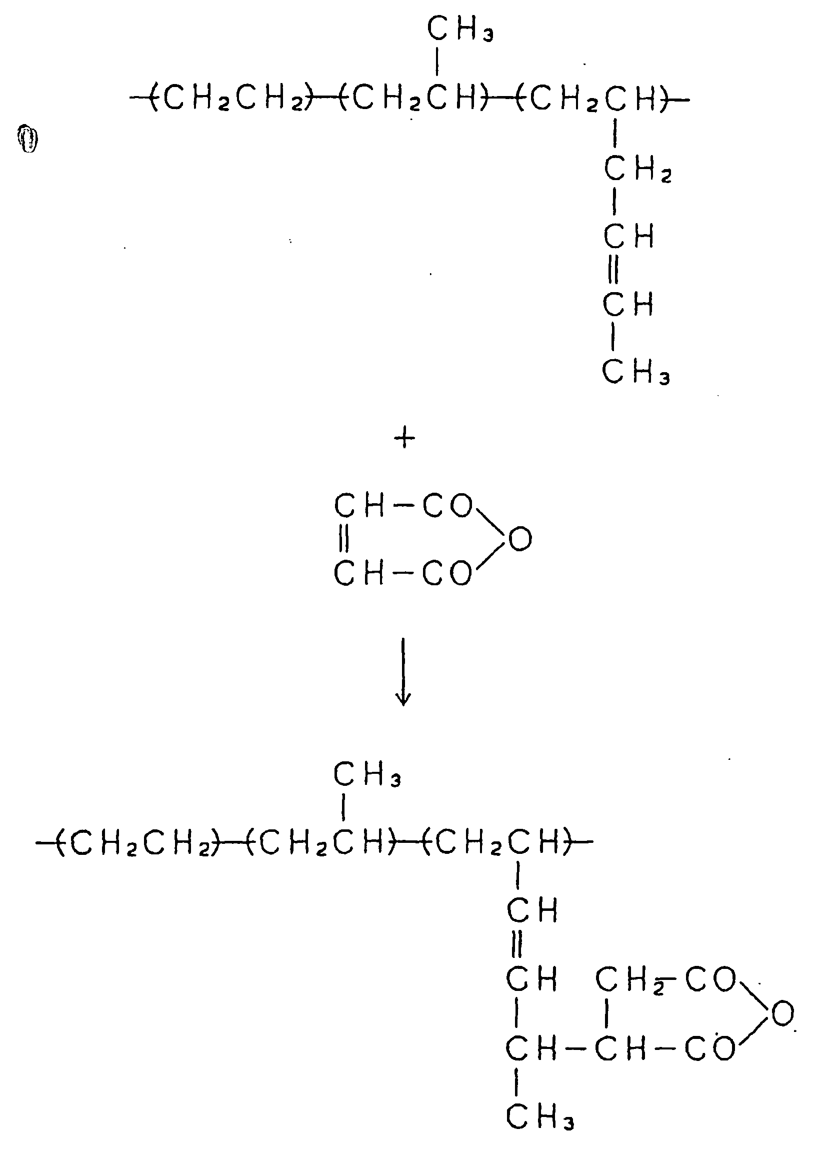

By means of the modification described above, the compatibility of the olefin polymer to the aliphatic polyamide resin matrix is improved, and the oil resistance and impact strength of the retainer are further improved.

These olefin polymers can be used alone or in combination thereof.

As the hydrocarbon polymer to be dispersed in the aliphatic polyamide resin matrix, there can be suitably used a styrene polymer which itself has no oil resistance in a lubricating oil, in addition to the olefin polymer, wherein the styrene polymer is a styrene elastomer. The styrene elastomer is generally a block copolymer (styrene block copolymer) having a polystyrene block and an intermediate rubber block, wherein the polystyrene block forms a physical bridge (domain) to become a bridged point and the rubber block plays a role as a soft segment in imparting rubber elasticity.

The intermediate rubber block include ethylene-butene copolymer (EB), polybutadiene (B), polyisoprene (I) and the like, and the intermediate rubber block is classified into linear and radial types according to a form of arrangement with polystyrene (S) as a hard segment.

In general, the physical properties of such a block copolymer is greatly influenced by such factors as (a) the length of block molecular chain, (b) the manner of bonding, (c) the bonding ratio and the like, and desirable characteristics can be obtained by selecting these factors properly.

The styrene elastomer is selected from styrene-ethylene/butene-styrene block copolymer [S-EB-S], styrene-butadiene-styrene block copolymer [S-B-S (linear) and (S-B) nX (radial)], styrene-isoprene-styrene block copolymer [SI-S].

As a production process of the styrene elastomer, there can be used living anion polymerization in the presence of an alkyl lithium catalyst. In order to obtain desirable retainer characteristics, polymerization may be carried out by controlling the number or length of the rubber block or styrene block. For example, the styrene-ethylene/butene-styrene block copolymer [S-EB-S] can be obtained by block-copolymerizing styrenes at both sides of an ethylene/butene copolymer having no residual double bond, which has been saturated by addition of hydrogen to polybutadiene.

Regarding the proportion of olefin polymer or styrene polymer, of the kind referred to in the characterizing part of claim 1 it is within a range from 5 to 25 % by weight, more preferably from 8 to 25 % by weight, based on the total components. When the proportion of the hydrocarbon polymer is less than 5 % by weight based on the total components, though depending upon the size or shape of the retainer, the addition effect of the hydrocarbon polymer is not obtained sufficiently. Further, when the proportion of the hydrocarbon polymer largely exceeds 25 % by weight, the relative amount of the aliphatic polyamide resin decreases and problems concerning physical properties and mechanical strength may arise.

Reinforcing fibers can be blended in the retainer for a rolling-contact bearing of the present invention in order to further increase its mechanical strength and heat resistance, similar to the prior art. Examples of the reinforcing fibers include glass fiber, carbon fiber, fibrous wollastonite, silicon carbide fiber, boron fiber, alumina fiber, Si-Ti-C-O fiber, metallic fiber (e.g. copper, steel, stainless steel, etc.), aromatic aliphatic polyamide (alamide) fiber, potassium titanate whisker, graphite whisker, silicon carbide whisker, silicon nitride whisker and the like. These can be used alone or in combination.

Regarding the proportion of the reinforcing fibers, the proportion of the reinforcing fibers is preferably within a range from 8 to 40 % by weight based on the total components. When the proportion of the reinforcing fibers is less than 8 % by weight based on the total components, the addition effect of the reinforcing fibers is not obtained sufficiently, and the mechanical strength and heat resistance of the retainer may not be sufficiently improved. Further, when the proportion of the reinforcing fibers exceeds 40 % by weight, the flexibility of the retainer is deteriorated, thereby causing breaks or cracks when molded articles are removed from molds or roller elements are pressed into pockets, particularly in the case of a retainer having a pocket with an undercut shape.

The retainer for a rolling-contact bearing of the present invention may contain, in addition to the above respective components, various additives such as inorganic fillers as colorants, copper or organic stabilizers, etc., in an amount similar to the prior art

The retainer for a rolling-contact bearing is produced by melting/kneading the above respective components to form them into a molding material such as pellets, powders, etc., followed by molding using an injection molding machine, similar to the prior art.

The present invention can be applied to various retainers for a rolling-contact bearing such as ball bearing, needle roller bearing, cylindrical roller bearing, tapered roller bearing and the like. Particularly, the present invention can be suitably applied to a retainer with an undercut shape.

In the retainer for a rolling-contact bearing of the present invention, a hydrocarbon polymer of the kind referred to in the characterising part of claim 1 having no oil resistance and good compatibility with an aliphatic polyamide resin matrix is dispersed in the aliphatic polyamide resin matrix so that the oil resistance when used in a heated lubricating oil can be greatly improved comparable to that of the super engineering plastic. Further, the retainer for a rolling-contact bearing of the present invention has flexibility which can not be obtained in the retainer made of super engineering plastic. Moreover, since the retainer for a rolling-contact bearing of the present invention is composed of the aliphatic polyamide resin and hydrocarbon polymer of the kind referred to in the characterising part of claim 1, it is easily available and inexpensive in comparison with those made of super engineering plastic.

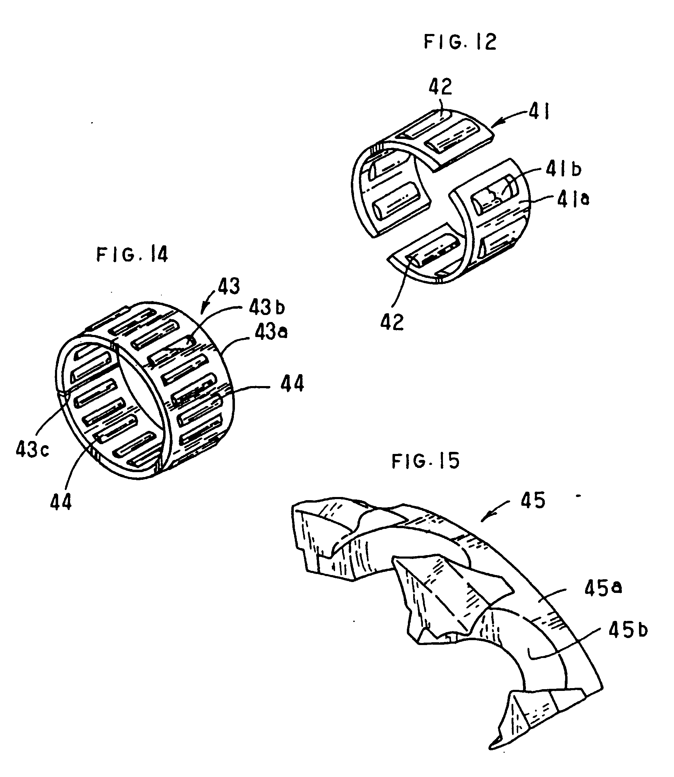

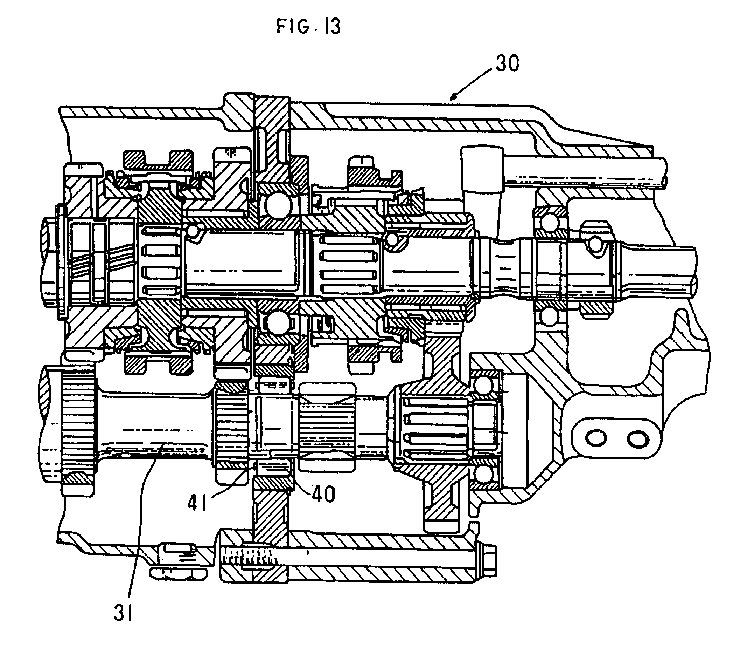

The retainer for a rolling-contact bearing of the present invention is suitably employed for rolling-contact bearings used in a lubricating oil heated to 130 to 180 °C. Examples of the rolling-contact bearing include a cylindrical roller bearing 40 used as a counter center bearing for supporting the central part of a counter shaft 31 of an automotive transmission 30 which is rotating freely (see Fig. 13), or a needle roller bearing. The retainer 41 for a cylindrical roller bearing 40 is produced by forming a plurality of pockets 41 b for introducing a cylindrical roller 42 into an annular body 41a split in two parts and composed of a synthetic resin wherein the hydrocarbon polymer of the kind referred to in the characterising part of claim 1 is dispersed in the aliphatic polyamide resin matrix (see Fig. 12). Further, the retainer 43 for a needle roller bearing is produced by forming a plurality of pockets 43b for introducing a needle roller 44 into an annular body 43a composed of a synthetic resin wherein the hydrocarbon polymer of the kind referred to in the characterising part of claim 1 is dispersed in the aliphatic polyamide resin matrix (see Fig. 14). The annular body 43a is split at one part of the circle, and it is incorporated into the counter shaft 31 by widely opening the split part 43c. Therefore, the retainer 43 for a needle roller bearing is required to have oil resistance and flexibility. Accordingly, the retainer of the present invention can suitably be used.

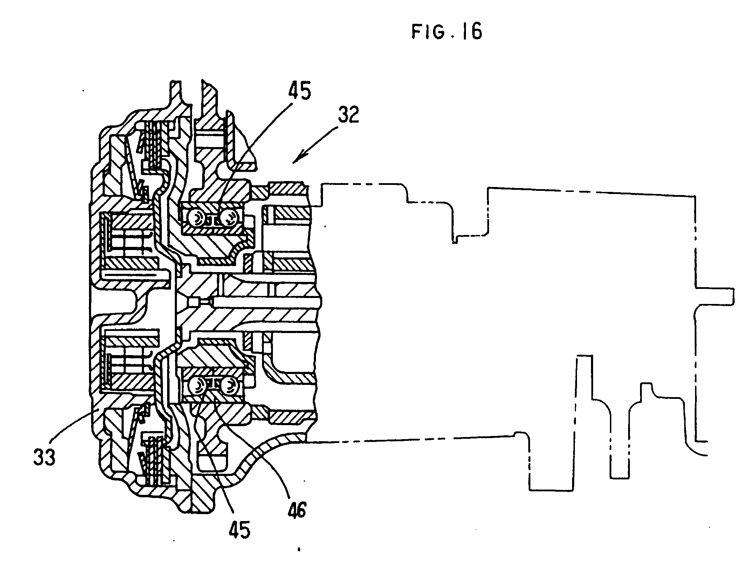

Further, examples of other rolling-contact bearings used in a lubricating oil heated to 130 to 180 °C include a double row angular ball bearing 46 for rotatably supporting a dutch drum 33 of an automotive trans-axle 32 (see Fig. 16). The retainer 45 for the double row angular ball bearing 46 is produced by forming a plurality of half-round pockets 45b for introducing balls into an annular body 45a composed of a synthetic resin wherein the hydrocarbon polymer of the kind referred to in the characterising part of claim 1 is dispersed in the aliphatic polyamide resin matrix (see Fig. 15).

### EXAMPLES

### Example 1

56.6 parts by weight of nylon 66 as an aliphatic polyamide resin matrix, 13.4 parts by weight of EPDM modified by grafting maleic anhydride as an olefin polymer, 30.0 parts by weight of glass fibers as reinforcing fibers and a small amount of a stabilizer were molten/kneaded, and then pelletized with a pelletizer to produce pellets for injection molding as a molding material.

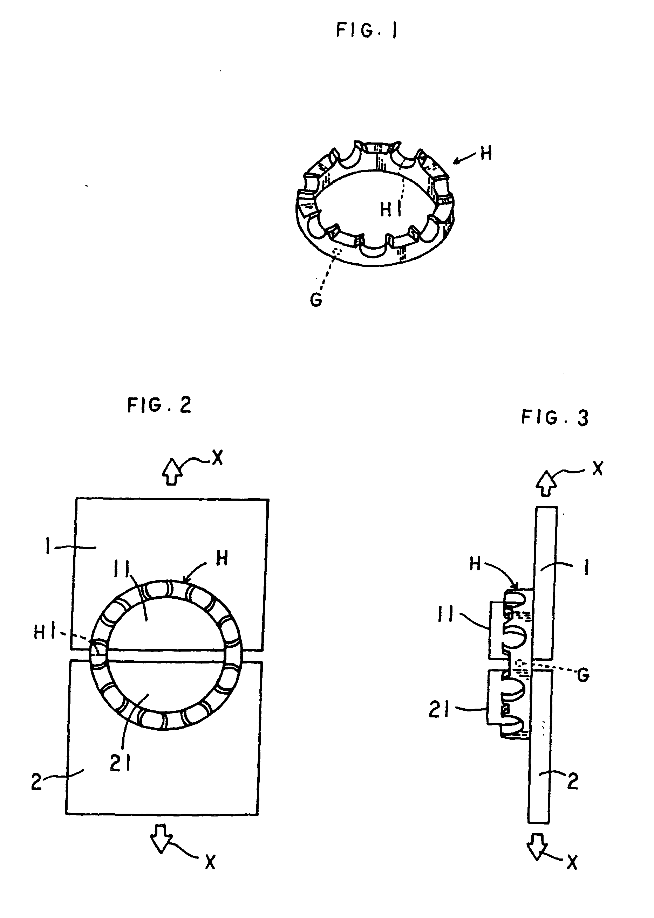

By using the pellets for injection molding, a crown retainer for a ball bearing H (inner diameter: 59 mm, outer diameter: 64 mm) having a shape shown in Fig. 1 was produced by injection molding (side face 1-point gate). In Fig. 1, the symbol G is a gate position, the symbol H1 is a weld line of the molded product generated at the position symmetrical to the gate position G.

### Example 2

56.6 parts by weight of nylon 66 as an aliphatic polyamide resin matrix, 13.4 parts by weight of a styrene-ethylene/butene-styrene block copolymer [S-EB-S] as a styrene polymer, 30.0 parts by weight of glass fibers as reinforcing fibers and a small amount of a stabilizer were molten/kneaded, and then pelletized with a pelletizer to produce pellets for injection molding as a molding material. By using the pellets, a crown retainer for a ball bearing H having a shape shown in Fig. 1 was produced in the same manner as described Example 1.

### Comparative Example 1

In the same manner as described in Example 1 except for using pellets for injection molding prepared by melting/kneading without modified EPDM, 75.0 parts by weight of nylon 66, 25.0 parts by weight of glass fibers and a small amount of a stabilizer, a crown retainer for a ball bearing H having a shape shown in Fig. 1 was produced.

### Comparative Example 2

In the same manner as described in Example 1 except for using pellets for injection molding prepared by melting/kneading without styrene polymer, 70.0 parts by weight of nylon 46 having better heat resistance than that of nylon 66, i.e. a reaction product of 1,4-diaminobutane and adipic acid, an aliphatic polyamide resin having a repeating unit represented by the formula (2):

-[HN-(CH₂)₆-NH-CO-(CH₂)₄-CO]- (2),

30.0 parts by weight of glass fibers and a small amount of a stabilizer, a crown retainer for a ball bearing H having a shape shown in Fig. 1 was produced.

The following respective tests were carried out as to the above Examples and Comparative Examples.

After installing the respective crown retainers for a ball bearing H of Examples 1 and 2 and Comparative Examples 1 and 2 onto protrusions 11, 21 so as to arrange their weld line H1 between a couple of jigs 1, 2, the initial values of the break strength (N) obtained when both jigs were stretched in upper and lower directions, as shown by arrows X in the drawings were measured.

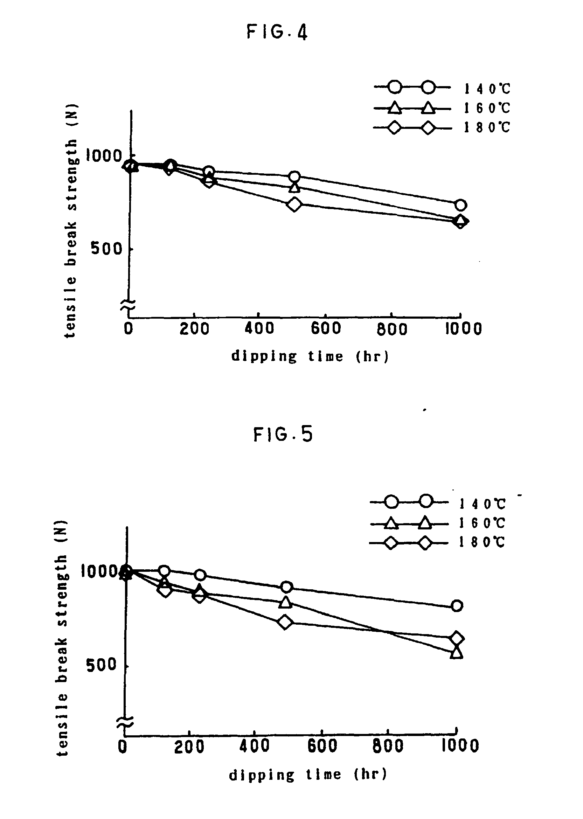

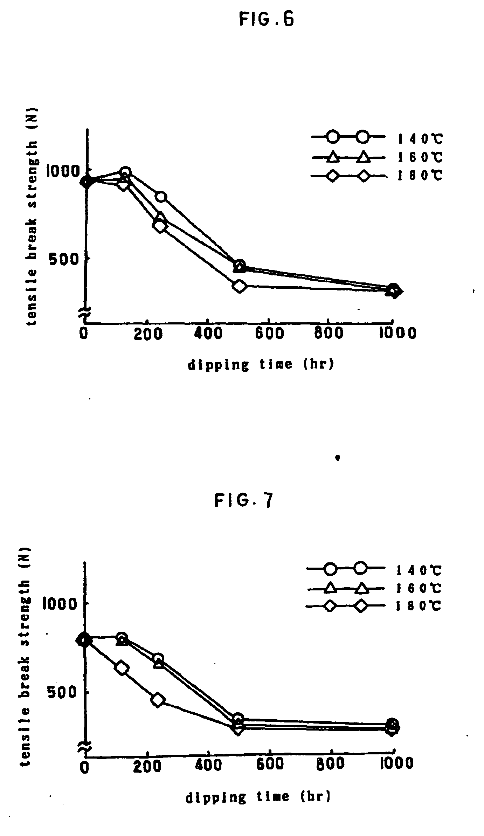

Then, a plurality of crown retainers for a ball bearing H of Examples 1 and 2 and Comparative Examples 1 and 2 were dipped in an automatic transmission oil heated to 140 °C, 160 °C or 180 °C, and the break strength (N) after heat treatment was measured at intervals of constant period of time in a similar way as described above. The measurement results of Example 1, Example 2, Comparative Example 1 and Comparative Example 2 are shown in Fig. 4, Fig. 5, Fig. 6 and Fig. 7, respectively, In these drawings, the plots - ○ - ○ -, - △ - △ - and - ◇ - ◇ - show the results at 140 °C, 160 °C and 180 °C, respectively.

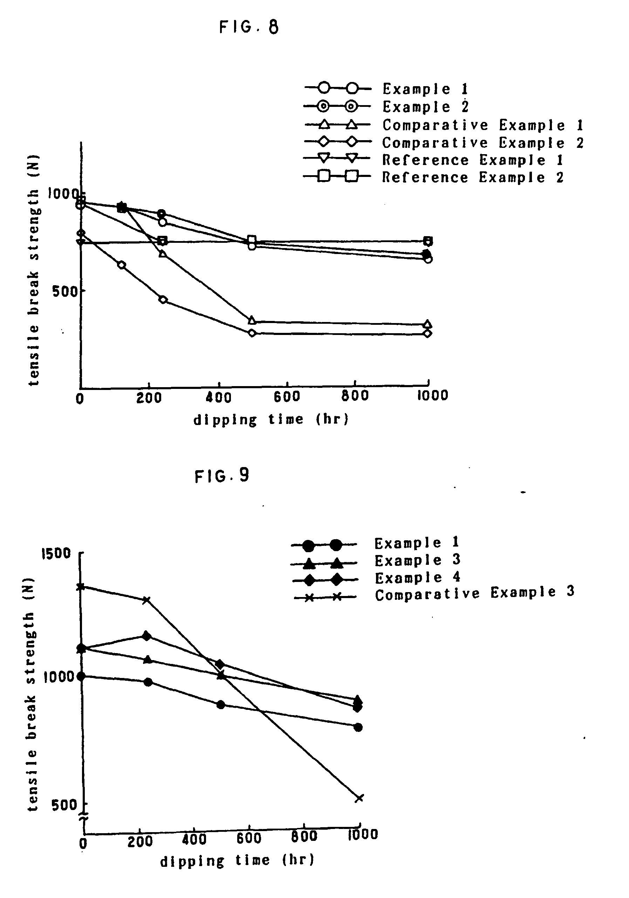

Further, a crown retainer for a ball bearing produced from pellets for injection molding prepared by melting/kneading 70.0 parts by weight of polyphenylsulfide (PPS) as a super engineering plastic, 30.0 parts by weight of glass fibers and a small amount of a stabilizer (Reference Example 1), and a crown retainer for a ball bearing produced from pellets for injection molding prepared by melting/kneading 80.0 parts by weight of polyether sulfone (PES), 20.0 parts by weight of glass fibers and a small amount of a stabilizer (Reference Example 2) were subjected to the similar break strength test after heat treatment at 180 °C. The results are shown in Fig. 8 along with the results of Examples 1 and 2 and Comparative Examples 1 and 2 at 180 C In Fig. 8, the plots - ○ - ○ -, - ⊚ - ⊚ -, - △ - △ - . - ◇ - 0 -, - ∇ - ∇ - and - □ - □ - show the results of Example 1, Example 2, Comparative Example 1, Comparative Example 2, Reference Example 1 and Reference Example 2, respectively.

As is apparent from the results shown in Fig. 4 to Fig. 8, the retainers of Comparative Example 1 wherein no modified EPDM has been blended and the retainer of Comparative Example 2, wherein no styrene polymer has been blended, exhibit a great reduction in break strength within 500 hours at any temperature. Accordingly, it is apparent that the retainers of Comparative Examples 1 and 2 are deteriorated by thermal oxidation in a high-temperature oil. To the contrary, the retainers of Examples 1 and 2 exhibit no great reduction in break strength within 1000 hours, and it was confirmed that they have excellent oil resistance comparable to that of the super engineering plastic such as PPS, PES and the like.

### Examples 3 and 4 and Comparative Example 4

In the same manner as described in Example 1 except for blending nylon 66, modified EPDM and glass fibers in the proportion shown in Table 1, a crown retainer for a ball bearing H having a shape shown in Fig. 1 was produced.

**Table 1**

| Amount (parts by weight) | | | |
|---|---|---|---|
| | Nylon 66 | Modified EPDM | Glass fibers |
| Example 3 | 60.0 | 10.0 | 30.0 |
| Example 4 | 63.3 | 6.7 | 30.0 |
| Com. Example 3 | 70.0 | 0 | 30.0 |

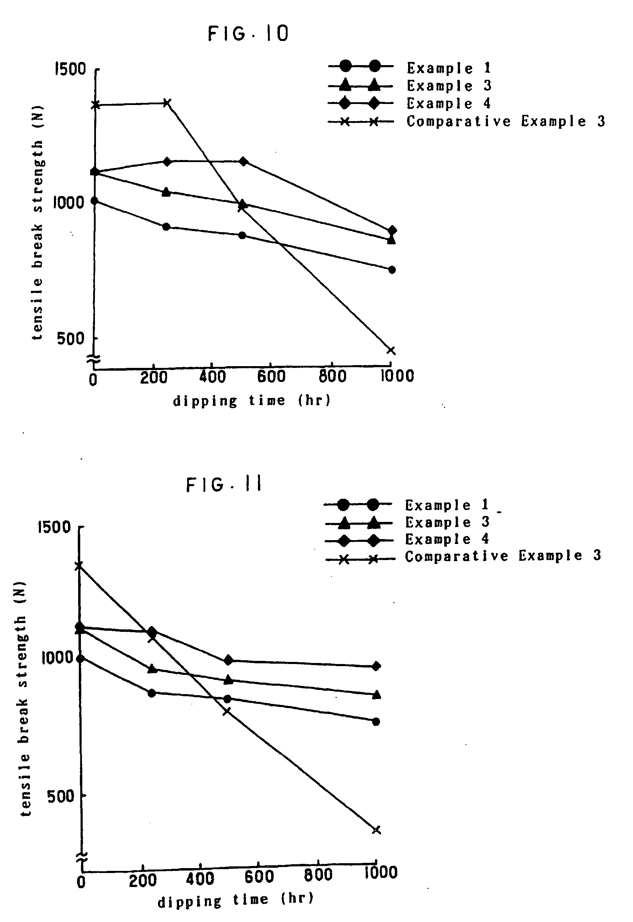

Regarding the above Examples 3 and 4 and Comparative Example 3, the strength of the retainer was measured in the same manner as described above. The measurement results at 140 °C , 160 °C and 180°C are shown in Fig. 9, Fig. 10 and Fig. 11, respectively, along with the measurement results of Example 1 (measurement results of Example 2 are almost the same as those of Example 1 so that they are not shown in Fig. 9 to Fig. 11). In these drawings, the dots - ● - ● -, - ▲ - ▲ -, - ◆ - ◆ - and - X - X - show the results of Example 1, Example 3, Example 4 and Comparative Example 3, respectively.

As is apparent from the results shown in Fig. 9 to Fig. 11, the retainer of Comparative Example 3 wherein no modified EPDM has been blended exhibits high break strength at the initial stage of heating, but the break strength is rapidly decreased due to thermal oxidation in a high-temperature oil. Accordingly, it is apparent that the retainer of Comparative Example 3 is deteriorated by thermal oxidation in a high-temperature oil. To the contrary, the retainers of Examples 1 to 4 exhibit no great reduction in break strength within 1000 hours, and it was confirmed that they have excellent oil resistance.

## Claims

1. A retainer for a rolling contact bearing used in a lubricating oil, composed of a resin comprising an aliphatic polyamide resin matrix and a hydrocarbon polymer, wherein the hydrocarbon polymer has no oil resistance and good compatibility with the aliphatic polyamide resin matrix and the hydrocarbon polymer is dispersed in the aliphatic polyamide resin matrix, the aliphatic polyamide resin being selected from Nylon 6 and Nylon 66,
the proportion of the hydrocarbon polymer being in a range of 5 to 25% by weight, **characterized in that**
the hydrocarbon polymer is an olefin polymer, selected from
a) ethylene-propylene-diene rubber, ethylene-propylene rubber, polypropylene and polyethylene;
b) a modified olefin polymer modified by copolymerizing it with any one selected from α,β-unsaturated carboxylic acid, an ester thereof and a metal salt thereof;
c) a modified olefin polymer obtained by grafting it with carboxylic acid or an acid anhydride thereof; and
d) a styrene polymer selected from styrene-ethylene/butene-styrene block copolymer, styrene-butadiene-styrene block copolymer and styrene-isoprene-styrene block copolymer.

2. The retainer according to claim 1, wherein in the case of a modified olefin polymer obtained by grafting, the modified olefin polymer is an ethylene-propylene-diene rubber modified by grafting maleic anhydride.

3. The retainer according to claim 1 or 2, which is reinforced with reinforcing fibres.

4. Use of the retainer according to any of claims 1 to 3, as a rolling-contact bearing incorporated in an automotive transmission.

## Patentansprüche

1. Käfig für ein Wälzlager, der in einem Schmieröl verwendet wird und der aus einem Harz ausgebildet ist, das eine Matrix aus einem aliphatischen Polyamidharz und ein Kohlenwasserstoffpolymer aufweist, wobei das Kohlenwasserstoffpolymer keine Ölbeständigkeit und eine gute Kompatibilität mit der Matrix aus dem aliphatischen Polyamidharz besitzt, und wobei das Kohlenwasserstoffpolymer in der Matrix aus aliphatischem Polyamidharz dispergiert ist,
wobei das aliphatische Polyamidharz aus Nylon 6 und Nylon 66 ausgewählt ist, wobei der Anteil des Kohlenwasserstoffpolymers im Bereich von 5 bis 25 Gew.-% liegt,
**dadurch gekennzeichnet,**
**daß** das Kohlenwasserstoffpolymer ein Olefinpolymer ist, das aus folgenden ausgewählt ist:
a) Ethylen-Propylen-Dien-Kautschuk, Ethylen-Propylen-Kautschuk, Polypropylen und Polyethylen;
b) einem modifizierten Olefinpolymer, das durch Copolymerisieren mit einem Bestandteil modifiziert ist, das aus α,β-ungesättigter Carbonsäure, einem Ester davon und einem Metallsalz davon ausgewählt ist;
c) einem modifizierten Olefinpolymer, das durch Aufpfropfen mit Carbonsäure oder einem Säureanhydrid davon erhalten wird; und
d) einem Styrolpolymer, das aus einem Styrol-Ethylen/Buten-Styrol-Blockcopolymer, Styrol-Butadien-Styrol-Blockcopolymer und Styrol-Isopren-Styrol-Blockcopolymer ausgewählt ist.

2. Käfig nach Anspruch 1,
wobei das modifizierte Olefinpolymer im Falle eines durch Aufpfropfen erhaltenen modifizierten Olefinpolymers ein durch Aufpfropfen von Maleinsäureanhydrid modifizierter Ethylen-Propylen-Dien-Kautschuk ist.

3. Käfig nach einem der Ansprüche 1 oder 2,
der mit Verstärkungsfasern verstärkt ist.

4. Verwendung eines Käfigs nach einem der Ansprüche 1 bis 3 als Wälzlager, das in ein Getriebe eines Kraftfahrzeugs eingebaut ist.

## Revendications

1. Élément de retenue pour un palier à contact de roulement qu'on utilise dans une huile de lubrification, composé d'une résine comprenant une matrice en résine polyamide aliphatique et un polymère d'hydrocarbure, dans lequel le polymère d'hydrocarbure ne présente aucune résistance à l'huile et une bonne compatibilité avec la matrice de résine polyamide aliphatique, et le polymère d'hydrocarbure est dispersé dans la matrice de résine polyamide aliphatique,
la résine polyamide aliphatique étant choisie parmi le nylon 6 et
le nylon 66,
la proportion du polymère d'hydrocarbure étant dans une plage de 5 à 25% en poids,
**caractérisé en ce que** le polymère d'hydrocarbure est un polymère oléfine, choisi parmi:
a) caoutchouc éthylène-propylène-diène, caoutchouc éthylène-propylène, polypropylène et polyéthylène;
b) un polymère oléfine modifié par copolymérisation avec un produit quelconque choisi parmi l'acide carboxylique α, β-insaturé, un ester dudit acide, et un sel métallique de celui-ci;
c) un polymère oléfine modifié obtenu par greffage avec l'acide carboxylique et un anhydride acide de celui-ci; et
d) un polymère styrène choisi parmi: bloc copolymère styrène-éthylène/butène-styrène, bloc copolymère styrène-butadiène-styrène et bloc copolymère styrène-isoprène-styrène.

2. Élément de retenue selon la revendication 1,
dans lequel, dans le cas d'un polymère oléfine modifié obtenu par greffage, le polymère oléfine modifié est un caoutchouc éthylène-propylène-diène modifié par greffage d'anhydride maléique.

3. Élément de retenue selon la revendication 1 ou 2,
lequel est renforcé avec des fibres de renfort.

4. Utilisation de l'élément de retenue selon l'une quelconque des revendications 1 à 3, dans un palier à contact de roulement incorporé dans une transmission d'automobile.
